# EUROPEAN PATENT SPECIFICATION

(11) **EP 2 917 291 B1**
(45) Date of publication and mention of the grant of the patent: **26.09.2018**
(21) Application number: 13853409.4
(22) Date of filing: 08.11.2013
(51) Int. Cl.: C09D 5/08, C09D 17/00, C09D 163/00

(54) **ANTICORROSIVE PIGMENTS INCORPORATED IN TOPCOATS**
IN DECKSCHICHTEN INTEGRIERTE ANTIKORROSIVE PIGMENTE
PIGMENTS ANTICORROSIFS INCORPORÉS DANS DES COUCHES DE FINITION

(30) Priority: 09.11.2012 US 201261724366 P; 15.03.2013 US 201313838851
(43) Date of publication of application: 16.09.2015
(73) Proprietor: AnCatt, New Castle, Delaware 19720 (US); Wang, Jianguo, Newark, Delaware 19711 (US); Wang, Sue, Newark, Delaware 19711 (US); Wang, Nar, Newark, Delaware 19711 (US)
(72) Inventor: WANG, Jianguo, Newark, DE 19711 (US); WANG, Sue, Newark, DE 19711 (US); WANG, Nar, Newark, DE 19711 (US)
(74) Representative: Patentanwaltskanzlei Matschnig & Forsthuber OG
(86) International application number: PCT/US2013/069078
(87) International publication number: WO 2014/074784

(56) References cited:
- WO-A2-2012/074617
- US-A1- 2005 276 983
- US-A1- 2009 123 742
- US-A1- 2010 297 422
- US-A1- 2012 263 961
- US-B2- 6 890 648
- US-B2- 7 476 444
- US-B2- 7 578 878

## Description

### Cross-Reference To Related Applications

This application claims priority to U.S. Provisional Application Ser. No. 61/724,366, filed Nov. 9, 2012.

### Field Of The Invention

The present disclosure relates to a coating composition containing an anticorrosive pigment, and to articles to which the coating composition is applied.

### Background of the Invention

Unextracted metal usually exists in its stable oxidized state as an ore. Extracted metal has a tendency to react with its environment and form a corresponding oxide. This process of oxide formation leads to deterioration and is called corrosion. Certain conditions, such as the existence of aggressive anions, can accelerate corrosion. Chloride and sulfate ions are two of the more aggressive anions and their presence will accelerate the corrosion of metal when contacted with a metal surface.

The use of an organic coating on a metal substrate is one of the most important approaches to reduce corrosion. Such organic coatings often contain an anticorrosive pigment to improve corrosion protection. An anticorrosion coating system usually consists of multiple coating layers including a primer layer; one or more inter layer(s), and a topcoat layer. Traditionally, anticorrosive pigments are incorporated in the primer layer to reduce the rate of corrosion. For example, U.S. 2006/0063872 discloses the use of anticorrosive material in the primer layer coated directly on a substrate, rather than a polymeric coating (e.g., a primer or interlayer).

Anticorrosive pigments include inhibitive pigments, sacrificial pigments, barrier pigments and cation exchange pigments. Inhibitive pigments include chromates, phosphates, molybdates, borates, red lead etc. Sacrificial pigments include metallic zinc. Barrier pigments include aluminum flake and steel flake. For a review of inhibitive,
sacrificial and barrier pigments see Alan Smith, "Inorganic Primer Pigments" Published by Federation of Societies for Coating Technology. Philadelphia, Pa., 1987. Cation exchange pigments, however, are a preferred anticorrosive pigment

The use of cation exchange pigments as an anticorrosive pigment is known. U.S. Pat. No. 4,419,137 describes corrosion inhibiting pigments including silica gel or alumina having metal cations, such as calcium, zinc, lead, strontium and barium. The cations are bound to the surface of the pigment particles by an ion exchange process. Other references disclose anticorrosion coatings in which toxic pigments are replaced with less toxic, more environmentally safe materials. For example, U.S. Pat. No. 4,738,720; U.S. SIR H856; U.S. Pat. No. 4,837,253; and U.S. Pat. No. 4,849,297 also describe cation-exchanger pigments such as calcium ion exchanged amorphous silica gel (e.g., Shieldex.RTM.) which are free of heavy metals. All of these known anticorrosive pigments are predominantly used as primer pigments and suggest an interaction of the anticorrosive pigments (e.g., cation exchange pigment) with the substrate metal to provide corrosion protection.

WO 2012/074617 A2 describes a water-based coating system used to form protective coatings on substrates and in particular metal containing substrates.

Despite efforts to create environmentally friendly and effective anticorrosion coating systems, corrosion is still a problem. Oxygen, water, and aggressive anions in the environment are still able to diffuse through the topcoat layer, one or more inter layer(s) and primer layer to arrive at the substrate metal surface and accelerate corrosion of the metal. A need exists for an improved, environmentally friendly anticorrosive coating of corrodible metal substrates.

The present disclosure relates to the use of an anticorrosive pigment, e.g., cation exchange pigment, incorporated in a topcoat layer of an anticorrosive system which provides effective protection to the substrate metals. The anticorrosive pigment may include all known cation exchangers used as anticorrosive pigments.

### Summary of the Invention

The present invention relates to a corrosion inhibiting coating composition according to claim 1. The coating composition includes a topcoat layer containing an anticorrosive pigment. The invention also relates to a method of protecting a metal or metal containing substrate from corrosion according to claim 10.

In one embodiment, the present disclosure relates to a coating composition as defined in claim 1 including a topcoat layer, and a primer layer, wherein the topcoat layer includes a cation exchange pigment. The cation exchange pigment may be present in the topcoat layer at about 3 to about 80 weight percent based on the dry film weight. The coating composition may further comprise at least one inter layer between the primer layer and the topcoat layer.

In some embodiments, the primer layer or the at least one inter layer also contain an anticorrosive pigment. In other embodiments, both the primer layer and the at least one inter layer also contain an anticorrosive pigments. The additional anticorrosive pigments may be the same anticorrosive pigments or may be different anticorrosive pigments.

### Detailed Description of the Invention

Described herein is a coating composition as per claim 1 containing an anticorrosive pigment, and articles to which the coating composition is applied.

The coating composition is based on cation exchange membranes. Cation exchange membranes are well known and practically impermeable to anions including corrosion anions. See B. Elvers, et al., Ullman's Encyclopedia of Industrial Chemistry, vol. A14, ed. 5, VCH Publishers, New York, 1985. Examples of known cation exchange membranes include thin cation exchange membranes used in chloralkali processes, fuel cells and vanadium redox batteries.

In general, a cation exchange membrane contains charged groups that may prevent anions from moving through the membrane. Cation exchange membranes can be classified into homogenous and heterogeneous membranes. Heterogeneous cation exchange membranes may be prepared using a finely powdered cation-exchangeable materials and a binder which are homogeneously blended and formed into the membrane. Organic and/or inorganic ion exchangers are often used as the ion-exchangeable materials. Thermoplastic polymers may be used as the binder. For example, heterogeneous membranes may be prepared by dispersing colloidal or finely ground ion exchange materials throughout an inert thermoplastic binder such as polyethylene, polystyrene or synthetic rubber, followed by rolling, compressing or extruding them into discs, films or
ribbons. The present disclosure may use any known materials and processes to prepare anticorrosive metal coatings, such as using a resin as a binder and a cation exchanger as a pigment. When the mixture is applied as a coating layer, the coating layer acts as a cation exchange membrane.

Organic coatings on a metal substrate may be used to reduce corrosion. These coatings usually consist of multiple layers including a primer layer; inter layer(s), and a topcoat layer ("topcoat"). The primer layer is the layer directly coated on the metal surface. Primer layers may provide adhesion of the overall coating to the metal surface and, traditionally, incorporate the anticorrosion pigment. The primer layer may consist of a vehicle (e.g., resin binder), a solvent (except in 100% solids coatings), a pigment, a filler (except for clear coatings) and additives. The primer layer excludes the normal washing, cleaning and other pre-treatment steps or applications used to prepare a corrodible metal substrate for coating. For example, the primer layer excludes Bonderite.RTM. 1303 which converts the metal surface to a nonmetallic amorphous, complex oxide layer. The surface is still an inorganic layer as opposed to an organic coating layer, as described herein.

Examples of primer layers include epoxy primers, organic zinc rich primers, inorganic zinc rich primers, powder coating primers and wash primers. Epoxy primers may be two-pack materials utilizing epoxy resins and either a polyamide or polyamine curing agents. They may be pigmented with a variety of inhibitive and non-inhibitive pigments. Zinc phosphate epoxy primers are the most frequently encountered.

The coatings may also optionally contain one or more inter layers between the primer layer and topcoat. Most coatings, including automotive, aerospace, aircraft and marine coatings, contain multiple layers including inter layers. The inter layer may serve as a barrier in the coating system, as well as adding film thickness or "build." Generally, the thicker the coating the longer the life. The inter layer may also provide adhesion between the primer layer and the topcoat. Some inter layers have special functions, for example, the inter layer of an automotive coating may provide color.

Inter layers may consist of a vehicle (e.g., resin binder), a solvent (except in 100% solids coatings), a pigment, a filler (except for clear coatings) and additives. Most inter layers are an epoxy inter layer.

The topcoat is the outmost layer of the coating composition. The topcoat is often used to provide a required appearance and surface resistance to the system. Depending on the conditions of exposure, it may also provide the first line of defense against weather and sunlight, open exposure, condensation (as on the undersides of bridges), highly polluted atmospheres, impact and abrasion, and bacteria and fungi. The present disclosure adds a new function to the topcoat which includes as a first line defense against corrosion by, for example, inhibiting the diffusion of aggressive anions to the surface of the metal substrate.

Topcoats may consist of a vehicle (e.g., resin binder), a solvent (except in 100% solids coatings), a pigment, a filler (except for clear coatings) and additives. Topcoats differ from primer layer and inter layers, in part, due to their function and specific additive that may be present in the topcoats to achieve the specific functions. Examples of topcoat formulations may include epoxy topcoats, polyurethane topcoats, alkyd topcoats, water borne topcoats, high temperature resistant topcoats, topcoat of powder coatings and PVC topcoats.

The coating composition of the present disclosure has at least two layers, a primer layer and a topcoat layer. The topcoat layer may contain at least one cation exchange pigment and may function as a cation exchange membrane to prevent or reduce corrosion of the underlying material. The primer layer may be any distinct layer between the underlying material and the topcoat which acts a primer layer or is traditionally considered a primer layer. The quality and quantity of the cation exchange pigment in the topcoat is sufficient to allow the topcoat to perform as a cation exchange membrane. The incorporation of at least one cation exchange pigment in the topcoat may inhibit anions found in the environment from moving into the coating layers and to the substrate. Accordingly, the topcoat may provide substantial anticorrosive protection to the metal substrate, particularly in the environments of aggressive anions.

The cation exchange pigment may be selected from any cation exchangeable material known to one skilled in the art for use as a corrosive inhibitor. Ion exchange is an exchange of ions between two electrolytes or between an electrolyte solution and a complex. In most cases the term is used to denote the processes of purification, separation, and decontamination of aqueous and other ion-containing solutions with solid polymeric or mineralic 'ion exchangers'. Typical ion exchangers may include ion exchange resins (functionalized porous or gel polymer), zeolites, montmorillonite, clay and soil humus. In the present disclosure, the ion exchangers may be cation exchangers that exchange positively charged ions (cations). Cation exchanger particles used to make a cation exchange membrane may vary in size.

According to the invention, the cation exchange pigment is an organic cation exchange resin or an inorganic cation exchange material. The organic cation exchanger may be selected from any known organic cation exchanger. An organic cation exchanger may consist of the polymer matrix and the functional groups. The polymer matrixes may include a polystyrene matrix or a polyacrylic matrix. For example, an organic cation exchange resin may be a strong acid type cation exchange resin (e.g., containing sulfonic acid groups) or a weak acid type cation exchange resin (e.g., containing carboxylic acid groups).

Inorganic cation exchangers are known in the art including, for example, those cation exchange pigments disclosed in U.S. Pat. No. 4,419,137, U.S. Pat. No. 4,738,720, U.S. Pat. No. 4,837,253, U.S. Pat. No. 4,849,297 and U.S. SIR H856. The prior art uses anticorrosive pigments primarily as primer pigments. The present disclosure relates to a new use for known anticorrosive pigments as topcoat pigments. As per claims 1 and 10, the inorganic cation exchangers are selected from the group consisting of metal ion exchanged silica, metal ion exchanged alumina, synthesized zeolite and natural zeolites. Synthesized zeolites may include zeolite A (Na, Ca, K), zeolite X (Na, K, Ba), zeolite Y (Na, Ca, NH.sub.4), zeolite L (K, NH.sub.4), zeolite omega (Na, H), zeolon (MOR-H, Na), ZSM-5, zeolite F (K) and zeolite W (K). Natural zeolites may include analcite, chabazite, sodalite, clinoptilolite, mordenite, and natrolite.

The inorganic cation exchanger pigment may be either a metal ion exchanged silica, metal ion exchanged alumina, synthesized zeolites, natural zeolites, and natural cation exchangers.

The exchangeable cation of the cation exchange pigment may be either a proton or a metal ion. For example, the metal ions may be potassium, sodium or calcium and the proton may be NH.sub.4.sup.+.

The topcoat may include a range of different amounts of cation exchange pigment depending on the application. In general, the topcoat may contain about 3 to about 80 weight percent of cation exchange pigment based on the dry film weight. Preferably, the topcoat may contain about 10 to about 50 weight percent of cation exchange pigment based on the dry film weight. The cation exchange compound may be incorporated into the topcoat as small particles or powders. Preferably, the cation exchange compound has an average particle size between about a 200-400 mesh.

The coating materials, including the topcoat, may be applied to form a coating having an average thickness from about 0.1 to about 5 mils, preferably from about 0.2 to about 2 mils.

The substrate may be any metal or metal containing material or composite that is subject to corrosion, particularly by aggressive anions. The substrate may include steel, galvanized steel, aluminum, aluminum alloys, zinc, zinc alloys, magnesium, and magnesium alloys.

In one embodiment, the cation exchange compound may be in the form of a finely ground powder which is mixed with topcoat resins, fillers additives and/or solvents to make topcoat paints. Upon application of the topcoat paint to a metal substrate coated with a primer, the dried paint film acts as a cation exchange membrane.

The topcoat may contain more than one type of cation exchange pigment. The chemical and physical properties of individual pigments may very. In some cases, more than one cation exchange pigment can be used to compensate for chemical or physical properties missing from one pigment or to gain a potential synergistic effect among more than one pigment. For example, small cation exchange particles may occupy the space
between bigger cation exchange particles which may achieve synergistic effects or a desirable particle size distribution. In one embodiment, the topcoat may contain both an organic and a inorganic cation exchange resin. In another embodiment, the topcoat may contain a strong acid type cation exchange resin and a weak acid type cation exchange resin.

The cation exchange pigment in the topcoat layer may be free or substantially free of other traditionally considered corrosion inhibitors, such as corrosion-inhibiting extenders, corrosion-inhibiting rare earth compounds and corrosion-inhibiting carbon pigments. The topcoat layer may contain trace amount of other traditionally considered corrosion inhibitors but not in any significant amount that would substantially impact the corrosion resistance of the coating.

The primer and inter layer(s) may contain a cation exchange pigment or other anticorrosive compound. The cation exchange pigment or anticorrosive compound may be any known in the art to provide anticorrosion resistance. The anticorrosive compound in these layers may be the same or different with respect to each other or with respect to the cation exchange pigment in the topcoat. The amount of anticorrosive compound in the primer or inter layer(s) may range from about 3 to about 80 weight percent in each layer. Preferably, the amount may range from about 10 to about 50 weight percent in each layer. In some embodiments, a cation exchange pigment or other anticorrosive compound may be present in both primer layer and topcoat layer, both an inter layer and the topcoat layer, or the primer layer, an inter layer and the topcoat layer. In other embodiments, the primer and inter layer(s) may also be free or substantially free of other traditionally considered corrosion inhibitors, such as corrosion-inhibiting extenders, corrosion-inhibiting rare earth compounds and corrosion-inhibiting carbon pigments.

The present disclosure also relates to a method according to claim 10 for preparing coated articles wherein the substrate is coated with a topcoat layer containing an anticorrosive pigment. The process may include normal paint preparation processes wherein a cation exchanger is used as a pigment in the topcoat. The topcoat may be applied to any primer layer or any inter layer as a topcoat. For example, the process can apply a topcoat including a
cation exchange pigment on epoxy primers, organic zinc rich primers, inorganic zinc rich primers, powder coating primers, wash primers and so-gel primers.

Articles to which the coating composition of the present disclosure may be applied include windmills, transportation infrastructure of highways, bridges, containers and storage tanks, off-shore oil platforms, metal structures, automobiles, rail cars, and petrochemical plants, military aircraft and missiles, commercial passenger aircrafts, cargo holds and cargo tanks, decks, and ships.

### Examples

The present invention is further defined in the following Examples. It should be understood that these Examples, while indicating preferred embodiments of the invention, are given by way of illustration only. From the above discussion and these Examples, one skilled in the art can ascertain the essential characteristics of this invention, and without departing from the spirit and scope thereof, can make various changes and modifications of the invention to adapt it to various uses and conditions.

### Example 1 - Primer Coated Panels

Primer coated steel panels are prepared for use to test topcoats having cation exchange compounds. Rust-Oleum.RTM., a commercial primer manufactured by RUST-OLEUM Co., is coated on cold roll steel (CRS) panels (Q panel Co.). The size of the panels is 7.5 cm.times.7.5 cm.times.0.08 cm. The panels are not pretreated before application of the primer. The coated panels are dried at approximately 25-30.degree. C. for a week. The thickness of the dried primer layer is approximately 75 micrometers.

### Example 2 - Primer Paint containing Anticorrosive Pigment

Primer coated steel panels are prepared for use to test topcoats having cation exchange compounds. The primer includes an anticorrosive pigment.

Part A - The following materials are mixed together and fully blended in a 300 mL ceramic jar ball mill overnight:

| **Material** | **Amount** | **Function** | **Supplier / Lot#** |
|---|---|---|---|
| BECKPOX EP 386w/52WA | 96.8 g | Waterborne epoxy resin | Cytec Co. / Lot# 130054037 |
| VXW 6208 | 3.65 g | Additive | Cytec Co. / Lot# 210085979 |
| VXW 6393 | 0.65 g | Additive | Cytec Co. / Lot# 210059639 |
| DI Water | 20.35 g | Diluent | na |
| Ti-select 6200 wol (TiO₂) | 16 g | Filler | DuPont Co. / Lot# 390428 |
| Mistron Ultramix (Talc) | 14 g | Filler | Luzenac America Inc, / Lot# T08192 |
| ZPA | 20.1 g | Anticorrosion Pigment | Heubach Co. / Lot# 0608A0017 |

The epoxy resin (e.g., BECKPOX EP 386w/52WA) acts as a primer binder. Other waterborne binders may also be used. VXW 6208 acts as an additive to help to disperse the pigment in the waterborne resins. VXW 6393 act as a deformer additive to prevent excessive forming during agitation and also during application of the coating. Other similar additives may also be used. Ti-select 6200 wol acts as a coating filler. Other similar TiO₂ products may also be used as a coating filler. Talc act as a filler. Talc is widely used as filler, or extender, of paints. Other similar Talc products may also be used as a coating filler.

The anticorrosive pigment ZPA is also added to the primer. Primers usually include an anticorrosion pigment. In the present disclosure, topcoat and the primer layer may both contain an anticorrosive pigment. The anticorrosive pigments may be the same or may be different. In some case, the use of a pigment in the primer is necessary to achieve the best results. The anticorrosion pigments in the topcoat and the primer layers both may contribute to the superior anticorrosive properties as disclosed herein.

The anticorrosion pigment used in the primer, or at least one inter layer, may be any known anticorrosive pigment. Preferably, the anticorrosion pigment used in the primer is non-toxic and does not contain heavy metal. Also, preferably the anticorrosive pigment is a cation exchanger.

ZPA is a waterborne primer anticorrosion pigment. Other similar waterborne pigments may also be used.

Part B - The following materials are mixed together and fully blended using a mixer.

| **Material** | **Amount** | **Function** | **Supplier / Lot#** |
|---|---|---|---|
| BECKOPOX VEH 2188/55WA | 138.84 g | Waterborne Epoxy Hardener | Cytec Co. |
| DI Water | 18.93 g | Diluent | na |

The epoxy hardener (e.g., BECKOPOX VEH 2188/55WA) is used to crosslink the epoxy resin. Other waterborne hardener may also be used.

Parts A and B are mixed together in a 1 to 0.21 ratio (wt.) of A to B. The mixture is used as a primer to coat cold rolls steel (CRS) panels (Q panel Co.). The size of the panels is 7.5 cm x 7.5 cm x 0.08 cm. The panels are not pretreated before application of the primer paint. The coated panels are dried at approximately 25-30°C for a week. The thickness of the dried primer layer is approximately 75 micrometers.

### Example 3 - Primer

Primer coated steel panels are prepared for use to test topcoats having cation exchange compounds. IRONCLAD®, a commercial metal and wood enamel produced by Benjamin Moore & Co., is coated on cold roll steel (CRS) panels (Q panel Co.). The size of the panels is 7.5 cm x 7.5 cm x 0.08 cm. The panels are not pretreated before application of the primer. The coated panels are dried at approximately 25-30°C for a week. The thickness of the dried primer layer is approximately 75 micrometers.

### Example 4 - Solvent borne epoxy topcoat without cation exchange pigment

Preparation of topcoat without cation exchange compounds used for coating steel panels.

Part A - The following materials are mixed together and fully blended in a 300 mL ceramic jar ball mill overnight:

| **Material** | **Amount** | **Function** | **Supplier / Lot#** |
|---|---|---|---|
| BECKPOX EP 140 | 40.0 g | Epoxy resin | Cytec Co. / Lot# 130046495 |
| BECKPOX EP 075 | 10.3 g | Epoxy resin | Cytec Co. / Lot# 320007822 |
| Ti-select 6200 wol (TiO₂) | 10.0 g | Filler | DuPont Co. / Lot # 390428 |
| Nicron 640 (Talc) | 25.0 g | Filler | Luzenac America Inc, / Lot# T09606500 |
| ExBAR4 (Barium sulfate) | 25.0 g | Filler | Excaliba Minerals |
| MEK | 20.0 g | Solvent | Klean-strip ® |

Barium sulfate is used as a non-cation exchanger or "inert" replacement for the cation exchanger. It is used to formulate an ion exchanger free formulation. Other paint fillers that are not an ion exchanger may also be used. The use of "inert" replacement of the cation exchanger is optional.

Part B - BECKPOX EH 625, Epoxy Hardener, Cytec Co. Lot # 130038210). Parts A and B are mixed together in a 1 to 0.14 ratio (wt.) of A to B. The mixture will be used to coat steel panels.

### Example 5 - Solvent borne epoxy topcoat containing Shieldex® AC3 cation exchange compounds as the topcoat pigment.

Preparation of topcoat with cation exchange compounds used for coating steel panels.

Part A - The following materials are mixed together and fully blended in a 300 mL ceramic jar ball mill overnight:

| **Material** | **Amount** | **Function** | **Supplier / Lot#** |
|---|---|---|---|
| BECKPOX EP 140 | 40.2 g | Epoxy resin | Cytec Co. / Lot# 130046495 |
| BECKPOX EP 075 | 10.1 g | Epoxy resin | Cytec Co. / Lot# 320007822 |
| Ti-select 6200 wol (TiO₂) | 10.0 g | Filler | DuPont Co. / Lot # 390428 |
| Nicron 640 (Talc) | 25.0 g | Filler | Luzenac America Inc, / Lot# T09606500 |
| Shieldex® AC3 | 25.0 g | Cation exchange pigment | W.R. Grace Co. / Lot# 1000130855 |
| MEK | 40.0 g | Solvent | Klean-strip ® |

Part B - BECKPOX EH 625, Epoxy Hardener, Cytec Co. Lot # 130038210). Parts A and B are mixed together in a 1 to 0.12 ratio (wt.) of A to B. The mixture will be used to coat steel panels.

### Example 6 - Solvent borne epoxy topcoat containing cation exchange resin C-249 as the topcoat pigment.

Preparation of topcoat with cation exchange compounds used for coating steel panels.

Part A - The following materials are mixed together and fully blended in a 300 mL ceramic jar ball mill overnight:

| **Material** | **Amount** | **Function** | **Supplier / Lot#** |
|---|---|---|---|
| BECKPOX EP 140 | 40.2 g | Epoxy resin | Cytec Co. / Lot# 130046495 |
| BECKPOX EP 075 | 10.3 g | Epoxy resin | Cytec Co. / Lot# 320007822 |
| Ti-select 6200 wol (TiO₂) | 10.0 g | Filler | DuPont Co. / Lot # 390428 |
| Nicron 640 (Talc) | 25.0 g | Filler | Luzenac America Inc, / Lot# T09606500 |
| C-249 | 25.0 g | Cation exchange pigment | Lanxess Sybron Co. Batch PA13C1, powder |
| MEK | 35 g | Solvent | Clean-Strip® |

Part B - BECKPOX EH 625, Epoxy Hardener, Cytec Co. Lot # 130038210). Parts A and B are mixed together in a 1 to 0.12 ratio (wt.) of A to B. The mixture will be used to coat steel panels.

### Example 7 - Water borne epoxy topcoat containing cation exchange resin C-249 as the topcoat pigment.

Preparation of topcoat with cation exchange compounds used for coating steel panels.

Part A - The following materials are mixed together and fully blended in a 300 mL ceramic jar ball mill overnight:

| **Material** | **Amount** | **Function** | **Supplier / Lot#** |
|---|---|---|---|
| BECKPOX EP 386w/52WA | 96.8 g | Waterborne epoxy resin | Cytec Co. / Lot# 130054037 |
| VXW 6208 | 3.5 g | Additive | Cytec Co. / Lot# 210085979 |
| VXW 6393 | 0.65 g | Additive | Cytec Co. / Lot# 210059639 |
| DI Water | 29.2 g | Diluent | na |
| Ti-select 6200 wol (TiO₂) | 41.5 g | Filler | DuPont Co. / Lot# 390428 |
| Mistron Ultramix (Talc) | 11.8 g | Filler | Luzenac America Inc, / Lot# T08192 |
| C-249 | 34.6 g | Cation exchange pigment | Lanxess Sybron Co. Batch PA13C1, powder |

Part B - The following materials are mixed together and fully blended using a mixer.

| **Material** | **Amount** | **Function** | **Supplier / Lot#** |
|---|---|---|---|
| BECKOPOX VEH 2188/55WA | 138.84 g | Waterborne Epoxy Hardener | Cytec Co. |
| DI Water | 18.93 g | Diluent | na |

Parts A and B are mixed together in a 1 to 0.17 ratio (wt.) of A to B. The mixture will be used to coat steel panels.

### Example 8 - Primer (Rust-oleum®) coated panel with topcoat without cation exchange pigment

The solvent borne epoxy topcoat without cation exchange pigment prepared according to Example 4 was coated on the primer coated panel described in Example 1. The topcoat was dried at approximately 25-30°C for a week. The thickness of the topcoat is approximately 75 micrometers.

### Example 9 - Primer (Rust-oleum®) coated panel with topcoat containing Shieldex® (solvent)

The solvent borne epoxy topcoat containing Shieldex® AC3 cation exchange compounds prepared according to Example 5 was coated on the primer coated panel described in Example 1. The topcoat was dried at approximately 25-30°C for a week. The thickness of the topcoat is approximately 75 micrometers.

### Example 10 - Primer (Rust-oleum®) coated panel with topcoat containing C-249 (solvent)

The solvent borne epoxy topcoat containing cation exchange resin C-249 prepared according to Example 6 was coated on the primer coated panel described in Example 1. The topcoat was dried at approximately 25-30°C for a week. The thickness of the topcoat is approximately 75 micrometers.

### Example 11 - Primer (Rust-oleum®) coated panel with topcoat containing C-249 (water)

The water borne epoxy topcoat containing cation exchange resin C-249 prepared according to Example 7 was coated on the primer coated panel described in Example 1. The topcoat was dried at approximately 25-30°C for a week. The thickness of the topcoat is approximately 75 micrometers.

### Example 12 - Primer Paint (w/ Anticorrosive Pigment) coated panel with topcoat without cation exchange pigment

The solvent borne epoxy topcoat without cation exchange pigment prepared according to Example 4 was coated on the panel coated with primer paint containing anticorrosive pigment described in Example 2. The topcoat was dried at approximately 25-30°C for a week. The thickness of the topcoat is approximately 75 micrometers.

### Example 13 - Primer Paint (w/ Anticorrosive Pigment) coated panel with topcoat containing Shieldex® (solvent)

The solvent borne epoxy topcoat containing Shieldex® AC3 cation exchange compounds prepared according to Example 5 was coated on the panel coated with primer paint containing anticorrosive pigment described in Example 2. The topcoat was dried at approximately 25-30°C for a week. The thickness of the topcoat is approximately 75 micrometers.

### Example 14 - Primer Paint (w/ Anticorrosive Pigment) coated panel with topcoat containing C-249 (solvent)

The solvent borne epoxy topcoat containing cation exchange resin C-249 prepared according to Example 6 was coated on the panel coated with primer paint containing anticorrosive pigment described in Example 2. The topcoat was dried at approximately 25-30°C for a week. The thickness of the topcoat is approximately 75 micrometers.

### Example 15 - Primer Paint (w/ Anticorrosive Pigment) coated panel with topcoat containing C-249 (water)

The water borne epoxy topcoat containing cation exchange resin C-249 prepared according to Example 7 was coated on the panel coated with primer paint containing anticorrosive pigment described in Example 2. The topcoat was dried at approximately 25-30°C for a week. The thickness of the topcoat is approximately 75 micrometers.

### Example 16 - Primer (IRONCLAD®) coated panel with topcoat without cation exchange pigment

The solvent borne epoxy topcoat without cation exchange pigment prepared according to Example 4 was coated on the primer coated panel described in Example 3. The topcoat was dried at approximately 25-30°C for a week. The thickness of the topcoat is approximately 75 micrometers.

### Example 17 - Primer (IRONCLAD®) coated panel with topcoat containing Shieldex® (solvent)

The solvent borne epoxy topcoat containing Shieldex® AC3 cation exchange compounds prepared according to Example 5 was coated on the primer coated panel described in Example 3. The topcoat was dried at approximately 25-30°C for a week. The thickness of the topcoat is approximately 75 micrometers.

### Example 18 - Primer (IRONCLAD®) coated panel with topcoat containing C-249 (solvent)

The solvent borne epoxy topcoat containing cation exchange resin C-249 prepared according to Example 6 was coated on the primer coated panel described in Example 3. The topcoat was dried at approximately 25-30°C for a week. The thickness of the topcoat is approximately 75 micrometers.

### Example 19 - Corrosion Potential Measurements

The corrosion potential of the topcoat-primer coating systems described in Examples 8 - 18 was measured using a Gamry Instruments model reference 600 TM Potentiostat/Galvanostat with corrosion system software. A three-electrode cell was setup. The counter electrode was a graphite rod (r - 3 mm), the reference electrode was a saturated calomel electrode (SCE), and the working electrode was the coated metal panel of which the exposed area to the electrolyte solution was - 3.5 cm². The electrolyte solution was a 3.5 wt. % aqueous solution of sodium chloride. Echem Analyst software was used to record the measured corrosion potential data. The recorded data is summarized in Tables 1-3.

**Table 1: Corrosion potentials of the Top coat - "Rust-oleum" primer systems, Immersed in 3.5 wt. % NaCl aqueous solution for 20 months**

| **Top Coat Cation exchange Pigment** | **Ecorr (mV)** |
|---|---|
| None Example 8, Primer (Rust-oleum®) coated panel with topcoat without cation exchange pigment | -480 |
| Shieldex® AC3 Example 9, Primer (Rust-oleum®) coated panel with topcoat containing Shieldex® (solvent) | -171 |
| C-249 Example 10, Primer (Rust-oleum®) coated panel with topcoat containing C-249 (solvent) | -43 |
| C-249 Example 11, Primer (Rust-oleum®) coated panel with topcoat containing C-249 (water) | -356 |

**Table 2: Corrosion potential of the Top coat - Water borne epoxy primer systems Immersed in 3.5 wt. % NaCl aqueous solution for 20 months**

| **Top Coat Cation exchange Pigment** | **Ecorr (mV)** |
|---|---|
| None Example 12, Primer Paint (w/ Anticorrosive Pigment) coated panel with topcoat without cation exchange pigment | -223 |
| Shieldex® AC3 Example 13, Primer Paint (w/ Anticorrosive Pigment) coated panel with topcoat containing Shieldex® (solvent) | -136 |
| C-249 Example 14, Primer Paint (w/ Anticorrosive Pigment) coated panel with topcoat containing C-249 (solvent) | -72 |
| C-249 Example 15, Primer Paint (w/ Anticorrosive Pigment) coated panel with topcoat containing C-249 (water) | -104 |

**Table 3: Corrosion potential of the Top coat- IRONCLAD ® primer systems Immersed in 3.5 wt. % NaCl solution for 20 months**

| **Top Coat Cation exchange Pigment** | **Ecorr (mV)** |
|---|---|
| None Example 16, Primer (IRONCLAD®) coated panel with topcoat without cation exchange pigment | -566 |
| Shieldex® AC3 Example 17, Primer (IRONCLAD®) coated panel with topcoat containing Shieldex® (solvent) | -309 |
| C-249 Example 18, Primer (IRONCLAD®) coated panel with topcoat containing C-249 (solvent) | -181 |

Corrosion potentials move in a more positive direction when the cathodic/anodic surface area ratio increases and the overall corrosion rate is less significant. *See* H. Leidheiser Jr., Prog. Org. Coat. 7 (1979) 79. The corrosion potential data in Tables 1-3 demonstrate that the topcoats containing cation exchange compounds move the corrosion potential in a more positive direction, i.e., topcoats containing cation exchange compounds are effective anticorrosion pigments. Moreover, the data in each separate Table demonstrates that the primer-topcoat systems coated on the same primer moves the corrosion potential in a more positive direction when a cation exchange compounds are added to the topcoat. This indicates that the cation exchange compounds in the topcoat increases the corrosion protection efficiency of the coating system. Finally, the data in Tables 1 and 2 indicate that, for the same primer, both solvent and water borne topcoats with cation exchange compounds exhibit a more positive corrosion potential than those of solvent borne topcoats without cation exchange compounds. Compared against each other, solvent borne topcoats with cation exchange compounds exhibit a more positive corrosion potential than water borne topcoats with cation exchange compounds.

The advantages of a water borne system include an volatile organic compound (VOC) free or very low VOC content. However, water borne systems may be less effective for corrosion protection because aggressive anions may be easier to transport through the coating layers and accelerate the corrosion of the metal substrate. The present disclosure greatly increases the protection ability of water born systems because the topcoat inhibits the anions from entering the coating layers from the environment. The results shown above demonstrate that water borne topcoats with cation exchange pigment is unexpectedly superior than solvent borne topcoats without cation exchange pigment, i.e., Example 11 is greater than Example 8 (Table 1) and Example 15 is greater than Example 2 (Table 2).

## Claims

1. A corrosion inhibiting coating composition for coating a metal substrate comprising:
a topcoat layer having an organic cation exchange pigment or an inorganic cation exchange pigment selected from the group consisting of a metal ion exchanged silica, metal ion exchanged alumina, synthesized zeolites, and natural zeolites where the exchangeable cation comprises one or more of a proton or a metal ion selected from potassium, sodium and calcium, and
a primer layer having a resin binder,
wherein the cation exchange pigment forms a heterogeneous cation exchange membrane in the topcoat layer.

2. The corrosion inhibiting coating composition of claim 1, wherein the topcoat layer includes about 3 to about 80 weight percent of cation exchange pigment.

3. The corrosion inhibiting coating composition of claim 1 or claim 2, wherein the organic cation exchange resin is a strong acid type cation exchange resin.

4. The corrosion inhibiting coating composition of claim 1 or claim 2, wherein the organic cation exchange resin is a weak acid type cation exchange resin.

5. The corrosion inhibiting coating composition of any preceding claim, wherein the cation exchange pigment is incorporated in a solvent borne topcoat.

6. The corrosion inhibiting coating composition of any one of claims 1 to 4, wherein the cation exchange pigment is incorporated in a water borne topcoat.

7. The corrosion inhibiting coating composition of any preceding claim, further comprising at least one inter layer between the primer layer and the topcoat layer.

8. The corrosion inhibiting coating composition of claim 7, wherein the at least one inter layer includes a cation exchange pigment.

9. The corrosion inhibiting coating composition of any one of the preceding claims, wherein the primer layer having a resin binder is selected from epoxy primers, organic zinc rich primers, inorganic zinc rich primers, powder coating primers and wash primers.

10. A method of protecting a metal or metal containing substrate from corrosion, the method comprising coating the substrate with a topcoat layer having an organic cation exchange pigment or an inorganic cation exchange pigment selected from the group consisting of a metal ion exchanged silica, metal ion exchanged alumina, synthesized zeolites, and natural zeolites, wherein the cation exchange pigment forms a heterogeneous cation exchange membrane in the topcoat layer.

11. The method of claim 11, wherein the topcoat layer includes about 3 to about 80 weight percent of cation exchange pigment.

## Patentansprüche

1. Korrosionshemmende Beschichtungszusammensetzung zur Beschichtung eines Metallsubstrats, umfassend:
eine Deckbeschichtungsschicht mit einem organischen Kationenaustauschpigment oder einem anorganischen Kationenaustauschpigment ausgewählt aus der Gruppe bestehend aus einem metallionenausgetauschten Siliziumdioxid, metallionenausgetauschtem Aluminiumoxid, synthetisierten Zeolithen und natürlichen Zeolithen, wobei das austauschbare Kation eines oder mehrere von einem Proton oder einem Metallion umfasst, das aus Kalium, Natrium und Calcium ausgewählt ist, und
eine Primerschicht mit einem Harzbinder,
wobei das Kationenaustauschpigment eine heterogene Kationenaustauschmembran in der Deckbeschichtungsschicht bildet.

2. Korrosionshemmende Beschichtungszusammensetzung nach Anspruch 1, wobei die Deckbeschichtungsschicht ungefähr 3 bis zu ungefähr 80 Gewichtsprozent an Kationenaustauschpigment umfasst.

3. Korrosionshemmende Beschichtungszusammensetzung nach Anspruch 1 oder Anspruch 2, wobei das organische Kationenaustauschharz ein Starksäurenkationenaustauschharz ist.

4. Korrosionshemmende Beschichtungszusammensetzung nach Anspruch 1 oder Anspruch 2, wobei das organische Kationenaustauschharz ein Schwachsäurenkationenaustauschharz ist.

5. Korrosionshemmende Beschichtungszusammensetzung nach einem der vorstehenden Ansprüche, wobei das Kationenaustauschpigment in einer lösungsmittelbasierten Deckbeschichtung aufgenommen ist.

6. Korrosionshemmende Beschichtungszusammensetzung nach einem der Ansprüche 1 bis 4, wobei das Kationenaustauschpigment in eine wasserbasierte Deckbeschichtung aufgenommen ist.

7. Korrosionshemmende Beschichtungszusammensetzung nach einem der vorstehenden Ansprüche, ferner umfassend mindestens eine Zwischenschicht zwischen der Primerschicht und der Deckbeschichtungsschicht.

8. Korrosionshemmende Beschichtungszusammensetzung nach Anspruch 7, wobei die mindestens eine Zwischenschicht ein Kationenaustauschpigment umfasst.

9. Korrosionshemmende Beschichtungszusammensetzung nach einem der vorstehenden Ansprüche, wobei die Primerschicht mit einem Harzbinder ausgewählt ist aus Epoxidprimern, organischen zinkreichen Primern, anorganischen zinkreichen Primern, Pulverbeschichtungsprimern und Washprimern.

10. Verfahren zum Schützen eines metallischen oder metallhaltigen Substrats vor Korrosion, wobei das Verfahren das Beschichten des Substrats mit einer Deckbeschichtungsschicht mit einem organischen Kationenaustauschpigment oder einem anorganischen Kationenaustauschpigment umfasst, das ausgewählt ist aus der Gruppe bestehend aus einem metallionenausgetauschten Siliziumdioxid, metallionenausgetauschtem Aluminiumoxid, synthetisierten Zeolithen und natürlichen Zeolithen, wobei das Kationenaustauschpigment eine heterogene Kationenaustauschmembran in der Deckbeschichtungsschicht bildet.

11. Verfahren nach Anspruch 11, wobei die Deckbeschichtungsschicht ungefähr 3 bis zu ungefähr 80 Gewichtsprozent an Kationenaustauschpigment umfasst.

## Revendications

1. Composition de revêtement inhibitrice de la corrosion destinée revêtement d'un substrat métallique comprenant :
une couche supérieure possédant un pigment organique échangeur de cation ou un pigment inorganique échangeur de cation choisi parmi le groupe constitué d'une silice ayant subi un échange d'ion métallique, d'une alumine ayant subi un échange d'ion métallique, de zéolites synthétisées et de zéolites naturelles, le cation échangeable comprenant un ou plusieurs d'un proton ou d'un ion métallique choisi parmi le potassium, sodium et le calcium, et
une couche d'apprêt possédant un liant de résine,
dans laquelle le pigment échangeur de cation forme une membrane échangeuse de cation hétérogène dans la couche supérieure.

2. Composition de revêtement inhibitrice de la corrosion selon la revendication 1, dans laquelle la couche supérieure inclut d'environ 3 à environ 80 % en poids de pigment échangeur de cation.

3. Composition de revêtement inhibitrice de la corrosion selon la revendication 1 ou la revendication 2, dans laquelle la résine échangeuse de cation organique est une résine échangeuse de cation de type acide fort.

4. Composition de revêtement inhibitrice de la corrosion selon la revendication 1 ou la revendication 2, dans laquelle la résine échangeuse de cation organique est une résine échangeuse de cation de type acide faible.

5. Composition de revêtement inhibitrice de la corrosion selon l'une quelconque des revendications précédentes, dans laquelle le pigment échangeur de cation est incorporé dans une couche de finition à base de solvant.

6. Composition de revêtement inhibitrice de la corrosion selon l'une quelconque des revendications 1 à 4, dans laquelle le pigment échangeur de cation est incorporé dans une couche de finition à base d'eau.

7. Composition de revêtement inhibitrice de la corrosion selon l'une quelconque des revendications précédentes, comprenant en outre au moins une couche intercalaire située entre la couche d'apprêt et la couche supérieure.

8. Composition de revêtement inhibitrice de la corrosion selon la revendication 7, dans laquelle l'au moins une couche intercalaire comprend un pigment échangeur de cation.

9. Composition de revêtement inhibitrice de la corrosion selon l'une quelconque des revendications précédentes, dans laquelle la couche d'apprêt possédant un liant de résine est choisie parmi des apprêts à base d'époxy, des apprêts organiques riches en zinc, des apprêts inorganiques riches en zinc, des apprêts de revêtement en poudre et des apprêts de lavage.

10. Procédé de protection d'un métal ou d'un métal contenant un substrat contre la corrosion, le procédé comprenant le revêtement du substrat par une couche supérieure possédant un pigment organique échangeur de cation ou un pigment inorganique échangeur de cation choisi parmi le groupe constitué d'une silice ayant subi un échange d'ion métallique, d'une alumine ayant subi un échange d'ion métallique, de zéolites synthétisées et de zéolites naturelles, dans lequel le pigment échangeur de cation forme une membrane échangeuse de cation hétérogène dans la couche supérieure.

11. Procédé selon la revendication 11, dans lequel la couche supérieure inclut d'environ 3 environ à 80 % en poids de pigment échangeur de cation.
